# EUROPEAN PATENT APPLICATION

(11) **EP 2 151 906 A2**
(43) Date of publication of application: **10.02.2010**
(21) Application number: 09009387.3
(22) Date of filing: 20.07.2009
(51) Int. Cl.: H02J 5/00

(54) **Spread spectrum resonant power delivery**

(30) Priority: 05.08.2008 US 86384 P; 30.09.2008 US 241268
(71) Applicant: Broadcom Corporation, Irvine, CA 92617 (US)
(72) Inventor: Bennett, James D., 36301 Hroznetin (CZ)
(74) Representative: Jehle, Volker Armin

(57) **Abstract**

Wirelessly delivering electric power to a target device. Operation includes generating a spread spectrum sequence, generating spread spectrum alternating current power based upon the spread spectrum sequence, coupling the spread spectrum alternating current power to a transmitting element for wireless power transmission by a non-radiated magnetic field, dynamically tuning the wireless power transmission according to the spread spectrum sequence, and communicating the spread spectrum sequence to the target device. The spread spectrum sequence may include a frequency hopping sequence and/or a phase hopping sequence. Communicating the spread spectrum sequence to the target device may employ Radio Frequency (RF) communications and be used to exchange a target device identity, target device billing information, target device power receipt level(s), a target device battery charge state, a request for power delivery from the target device, and/or authentication information from the target device.

## Description

### CROSS REFERENCE TO PRIORITY APPLICATION

This application claims priority under 35 U.S.C. 119(e) to U.S. Provisional Application Serial No 61/086,384, filed August 5, 2008, which is incorporated herein by reference in its entirety for all purposes.

### BACKGROUND

### 1. Technical Field

The present invention relates generally to the wireless charging of a battery powered device; and more particularly to techniques for near field wireless resonance power delivery to a target device.

### 2. Related Art

All electronic devices require electrical power to operate. Mobile devices such as laptop computers and cell phones typically include a rechargeable battery that is recharged when the device is plugged into a power socket. Rechargeable batteries must be charged from wall power regularly to maintain battery life because rechargeable batteries discharge even when not used. The users of the mobile devices often suffer due to inaccessibility of electrical power for battery charging. In such a situation, the user must carry multiple batteries for continued operation of the mobile device. Requiring a user to carry backup batteries not only incurs the expense of the additional battery but requires transport space and increased transport expense.

Users of mobile devices usually carry power cables so that they can recharge the batteries of their mobile devices. These power cables are often misplaced or lost, inconveniencing the users. Quite often, the power cables are device specific and cannot be used in place of one another. Further, even with a power cable in hand, power sockets may be unavailable. This problem is a particular issue in airports or other public places, which users of the mobile devices frequent. In some critical applications, such as military applications and medical applications, it becomes a dangerous if not disastrous to interfere with an ongoing activity/communication of a mobile device simply to recharge the device's battery.

Near field power delivery has been known for many years. Nikola Tesla first experimented with such power delivery many years ago, although his solutions were not viable for various reasons. Near field power delivery typically exploits magnetically coupled resonance, which allows two objects resonating at the same frequency to exchange energy with moderate efficiency. The frequency of such near field resonance may be much lower than wireless communication frequencies, e.g., 10 MHz for near field resonances compared to 2 GHz for wireless communications. Thus, near field power delivery shows much promise, although it is not yet commercially exploited.

Further limitations and disadvantages of conventional and traditional approaches will become apparent to one of ordinary skill in the art through comparison of such systems with the present invention.

### BRIEF SUMMARY OF THE INVENTION

The present invention is directed to apparatus and methods of operation that are further described in the following Brief Description of the Drawings, the Detailed Description of the Invention, and the claims.

According to an aspect, a spread spectrum power delivery system for wirelessly delivering electric power to a target device is provided, the spread spectrum power delivery system comprising:
a spread spectrum power source comprising:
   a power source operable to source spread spectrum alternating current power;
   a sending resonant coupling component operable to couple the spread spectrum alternating current power to a transmitting element for wireless power transmission by a non-radiated magnetic field;
the spread spectrum power source capable of dynamically tuning the wireless power transmission according to a spread spectrum sequence; and
a communication module coupled to the spread spectrum power source and operable to communicate the spread spectrum sequence to the target device.

Advantageously, the sending resonant coupling component comprises a coil that is operable to source the non-radiated magnetic field.

Advantageously, the sending resonant coupling component forms the non-radiated magnetic field substantially omni-directionally.

Advantageously, the sending resonant coupling component forms the non-radiated magnetic field directionally.

Advantageously, the spread spectrum sequence comprises a frequency hopping sequence.

Advantageously, the spread spectrum sequence comprises a phase hopping sequence.

Advantageously, the communication module comprises a Radio Frequency (RF) interface.

Advantageously, the RF interface is operable to receive data from the target device that comprises at least one of:
a target device identity;
target device billing information;
target device power receipt level(s); and
a target device battery charge state.

Advantageously, the RF interface is operable to receive a request for power delivery from the target device.

Advantageously, the RF interface is operable to receive authentication information from the target device.

Advantageously, the spread spectrum power source further comprises:
a pseudo random sequence generator operable to generate a pseudo random sequence; and
a synthesizer oscillator operable to produce a frequency input to the power source used for generating the spread spectrum alternating current power.

According to an aspect, a method for wirelessly delivering electric power to a target device comprises:
generating a spread spectrum sequence;
generating spread spectrum alternating current power based upon the spread spectrum sequence;
coupling the spread spectrum alternating current power to a transmitting element for wireless power transmission by a non-radiated magnetic field;
dynamically tuning the wireless power transmission according to the spread spectrum sequence; and
communicating the spread spectrum sequence to the target device.

Advantageously, the method further comprises forming the non-radiated magnetic field substantially omni-directionally.

Advantageously, the method further comprises forming the non-radiated magnetic field directionally.

Advantageously, the spread spectrum sequence comprises a frequency hopping sequence.

Advantageously, the spread spectrum sequence comprises a phase hopping sequence.

Advantageously, communicating the spread spectrum sequence to the target device employs Radio Frequency (RF) communications.

Advantageously, the method further comprises RF communicating information from the target device that comprises at least one of:
a target device identity;
target device billing information;
target device power receipt level(s); and
a target device battery charge state.

Advantageously, the method further comprises RF communicating information from the target device that comprises a request for power delivery from the target device.

Advantageously, the method further comprises RF communicating information from the target device that comprises authentication information from the target device.

Advantageously, generating a spread spectrum sequence comprises:
generating a pseudo random sequence; and
producing the spread spectrum alternating current power based upon the pseudo random sequence.

Other features and advantages of the present invention will become apparent from the following detailed description of the invention made with reference to the accompanying drawings.

### BRIEF DESCRIPTION OF THE DRAWINGS

FIG. 1 is a block diagram illustrating a spread spectrum power source wirelessly coupled to a plurality of the target devices for wireless power delivery according to embodiments of the present invention;
FIG. 2 is a block diagram illustrating a target device that wirelessly receives spread spectrum power in accordance with an embodiment of the present invention;
FIG. 3 is a flowchart illustrating operations performed by the system of FIG. 1 during resonant power transfer from a spread spectrum power source to a target device in accordance with an embodiment of the present invention;
FIG. 4 is a block diagram illustrating a direct sequence spread spectrum power source that wirelessly transfers power to a target device in accordance with an embodiment of the present invention;
FIG. 5 is a block diagram illustrating a pseudo random sequence spread spectrum power source that wirelessly transfers power to a target device in accordance with an embodiment of the present invention;
FIG. 6 is a block diagram illustrating a system for wireless power delivery constructed according to embodiments of the present invention that uses SIM (Subscriber Identification Module) card based authentication of target devices;
FIG. 7 is the block diagram illustrating a 'spread spectrum resonant power charging module' constructed and operating in accordance with one or more embodiments of the present invention;
FIG. 8 is the block diagram illustrating 'spread spectrum power charging circuitry' constructed and operating in accordance with one or more embodiments of the present invention; and
FIG. 9 is a flowchart illustrating operations performed by the spread spectrum power manager of FIG. 4, FIG. 5, and FIG. 6 during resonant power charging operation in accordance with embodiments of the present invention.

### DETAILED DESCRIPTION OF THE DRAWINGS

Embodiments of the present invention address battery power charging in-situ from a remote power source (station) wirelessly using radiated/magnetic power or non-radiated magnetic fields. This approach of recharging a battery in remote devices is applicable to fairly long distance between a power source and a target device i.e., a portable electronic target device having rechargeable battery. In some embodiments of the present invention the delivery of power is conducted through relatively high frequency resonant magnetic coupling between a power source and a target device, the target device being an electronic device that runs on a portable rechargeable battery embedded in it. Such high frequency coupling is magnetic coupling in some embodiments but may be Radio Frequency (RF) coupling in other embodiments. Such coupling may be described herein as wireless power transfer, beam forming, RF beaming, or other beaming/power delivery. In typical embodiments of the present invention for wireless power transfer, the power source and the target device are tuned to the same frequency. This results in magnetic resonance in the target device for power transmitted by the power source, with air as the medium for power transfer. According to aspects of the present invention the frequency of the wirelessly coupled power charging signal, i.e., target frequency, is varied over time in a "spread spectrum" manner. The spread spectrum variation of the powering magnetic field may include hopping in frequency over time and/or varying phase of the powering magnetic/RF field such as with +-180 degree variation and/or +-90 degree variation, for example. Such variations in frequency and/or phase reduce the risk of inadvertently coupling charging power to proximate parasitic circuits that could be damaged by the inadvertent coupling. Further, such variations in frequency and phase helps to prevent unintended recipients, i.e., power stealers, from being charged by the magnetic/RF field.

In accordance with some embodiments of the present invention, the magnetic coupling between a spread spectrum power source and a target device enables the power transfer. A magnetic field is directed towards the target device by properly shaping a magnetic generating coil that is powered by the spread spectrum power source. This system works on a transformer principle but with an air core and coupling across a distance. For example, the system of the present invention may use one or more coils disposed in a floor or ceiling of a room with target devices within the room receiving power. However, coils of the present invention could be disposed in a structure such as a kiosk in a shopping mall or airport, with an operator of the kiosk charging target devices for being charged at the kiosk. Various other installations of the device may be employed according to the teachings described herein.

Magnetic signals/fields created by the power source are received by an antenna/coil of the target device. The received signals/fields charge capacitors through diodes at the target device. An array of such capacitors may be connected in series using a plurality of diodes. This array of capacitors and plurality of diodes helps in rectification of AC (alternating current) to DC (direct current) and may amplifying the DC voltage to a value that is sufficient to charge a battery in the target device. A power/voltage sensing mechanism of the target device helps to control the power/voltage of the signal used to charge the battery, in accordance with the present invention. A low voltage limit/low power level sensing circuitry in the target device initiates a power request to the spread spectrum power source (sometimes referred to as a wireless power station). A high voltage limit/high power level sensing circuit senses the maximum allowable battery voltage or power level during charging. Once the battery is charged to a maximum level, the high voltage sensing circuitry initiates a termination of power delivery, such as by communicating a request for the spread spectrum power source (power station) to cutoff the power, by terminating the wireless transmission of magnetic fields (radiated or non-radiated, as the case may be) / magnetic resonant power transmissions.

Authorization module(s) of the target device and the spread spectrum power source communicate to authenticate the target device for receipt of resonant power from the spread spectrum power source. For example, such authentication is done based on the information that the authorization module shares with the spread spectrum power source. Specifically, in one embodiment, the authentication is conducted based on the comparison of authentication information sent by the authorization module with other information available in an authentication database in the spread spectrum power source.

According to an aspect of the present invention, the spread spectrum power source and the target device communicate with one another via the power delivery signal. These communications may include information relating to the power charging or other information. Because of the strong wireless coupling between the spread spectrum power source and the target device, high data rate communications may be supported by using this technique. For communications from the target device to the spread spectrum power source, the same principle may be employed. However, in some embodiments, communications between the target device and the spread spectrum power source may be supported by other wireless techniques such as Wireless Local Area Network (WLAN) operations, e.g., IEEE 802.11x, Wireless Personal Area Network operations (WPAN) operations, e.g., Bluetooth, infrared communications, cellular communications and/or other techniques.

The power delivery operation is either initiated by the 'spread spectrum power source' or by the request made by the target device. The initiation of the power delivery by the 'spread spectrum power source' is done by sending a beacon signal to all the target devices in a nearby surrounding of the 'spread spectrum power source'. The beacon signal offers the power delivery service. Upon this solicitation, if the target device senses the low battery charge, it will proceed to request for the RF power signal. Subsequent RF power delivery into the target device is done only upon the authenticity proof of the target device with the 'spread spectrum power source'.

In another embodiment of the present invention the target device initiates the resonant power charge. In this approach a spread spectrum power manager of the target device monitors the battery charge, when the battery charge falls below a low voltage limit it request 'spread spectrum power source' for power delivery.

Authentication of resonant power delivery from the spread spectrum power source to multiple target devices is implemented by way of exchanging unique token issued to each of the target devices. This token is generated by the spread spectrum power source's 'token generator module' and sent it to the power requesting target device. The exchange of this token by the target device with the 'spread spectrum power source' periodically ensures that the requesting target device is an authentic target device. The process of issuing the token to each target device requesting for power delivery is done based on the authenticity verification. In the present invention it is target device that identifies itself with the 'spread spectrum power source' by sending the subscription information, SIM card identity, etc. Once the authenticity is proven then the target device is eligible to receive a unique token. The tokens are randomly generated by pseudo random number generator. The communication of the token to the target device is done through encryption/decryption process so that other target devices fail to understand this token.

The token exchange approach between the target device and the 'spread spectrum power source' facilitates the resonant power delivery to multiple legitimate target devices simultaneously from a single spread spectrum radiation beam. Only those target devices which have a token and 'random seed' sent from 'spread spectrum power source', will know the frequency switching sequence of the spread spectrum. This naturally filters out the unauthorized target devices from receiving the resonant power delivered in the form of RF (spread spectrum) signal power. The token exchange approach facilitates a simpler way of metering and billing for the amount of power received by each target devices (holding token) independently.

Protection against RF power loss to unintended target devices is implemented in multiple levels (or steps) depending on the context of power delivery requirements. Frequency switching at regular time intervals according to a frequency hopping sequence is one level of power delivery service with security. Any legitimate target device is expected to track the frequency switching synchronously. The spread spectrum characteristic is a first level of security protection against loss of power to unintended or unauthorized target devices. Phase shifting according to a sequence also reduces/minimizes such loss of power to unintended/unauthorized devices and also to parasitic circuits that could be damaged by such power delivery.

A synthesizer oscillator in the spread spectrum power source is used to generate the spread spectrum frequencies. In one embodiment, a reference RF signal produced by the synthesizer oscillator has a center frequency fₒ which can be stepped up or down from fₒ resulting in a frequency of the generated signal at fₛ = fₒ ± kfₛₛₜₑₚ, where 'k' is a variable which can take integer values in succession. In another embodiment of the present invention 'k' takes pseudo random integer values generated from a 'pseudo random number generator' in the spread spectrum power source. fₛₜₑₚ is the size of the frequency step during frequency switching. The speed at which 'k' is varied decides the rate of change of frequency fₛ during frequency switching (or stepping). The variable 'k' is varied at constant or a variable speed making the process of tracking fₛ most difficult while 'k' changes with variable speed, particularly during random frequency switching.

With regard to the spread spectrum signal, direct frequency switching is one embodiment of the present invention. Even though the frequency is sequentially switched, it becomes very difficult for any unauthorized target device to follow the spread spectrum for a resonant power reception. This is because the switching is done at a rapid rate and such illegitimate target devices do not have knowledge of the frequency switching information unlike legitimate target devices. Only a target device which knows the information such as rate of change of frequency switching, the time interval during which the frequency remains constant, etc. can only track the spread spectrum precisely by altering resonant frequencies of its receiving circuitry.

In another embodiment of the present invention the frequency switching is done in a pseudo random sequence. The pseudo random sequencing is the second level of security in the present invention. In order to communicate the random sequence, a unique randomly generated seed value is communicated to each of the target devices. This helps the target devices to synchronize with frequency switching random sequence. Due to the randomness of the frequency switching unauthorized target devices cannot track the spread spectrum.

As another third level of security, in the present invention, the rate at which the frequency switching takes place is made a variable changing from time to time. This rate of change of frequency switching is implemented for both the direct sequence and pseudo random sequence of frequency stitching techniques.

The instantaneous resonating power reception maximizes the received power. The received signal is rectified into DC (direct current) and this DC voltage will charge capacitors connected as a voltage multiplier including rectifying diodes and capacitors. The resultant voltage after multiplication to a certain threshold level will charge the rechargeable battery of the target devices.

A voltage sensing mechanism helps in controlling the battery charge, in accordance with the present invention. A low voltage limit sensing circuit does the power request with the 'spread spectrum power source' and a high voltage limit sensing circuit senses the maximum battery voltage. Once the battery is charged to a maximum level the high voltage sensing circuit will request the 'spread spectrum power source' to cutoff the RF signal power.

At the end of the battery recharge operation, the metering and billing information are communicated to the 'spread spectrum power source' from the target device. In another embodiment of the present invention the metering of the power delivery is done on the 'spread spectrum power source' itself for billing purpose.

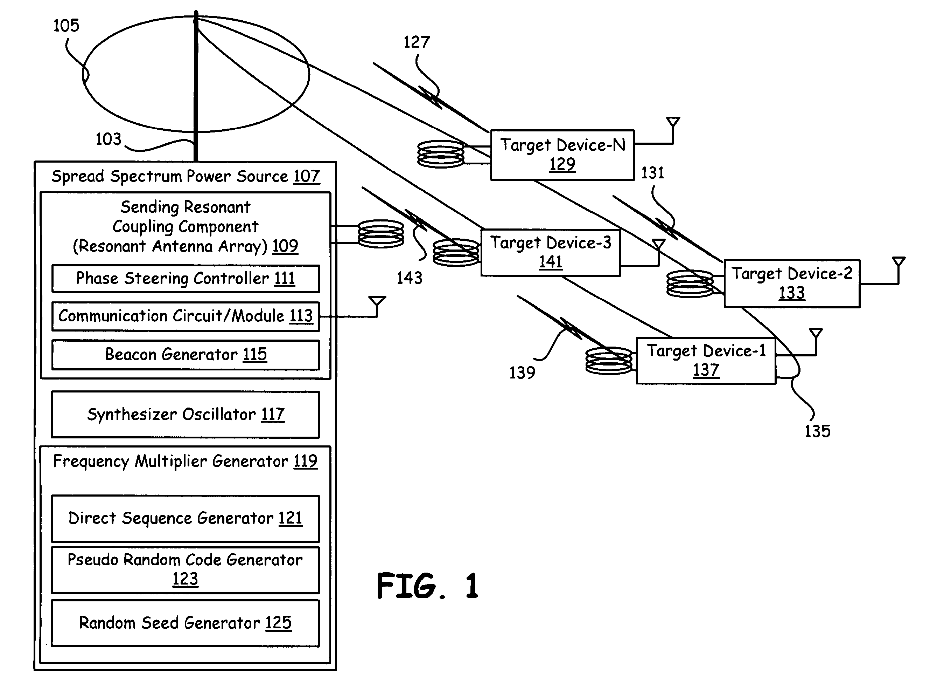

FIG. 1 is a block diagram illustrating a spread spectrum power source wirelessly coupled to a plurality of the target devices for wireless power delivery according to embodiments of the present invention. The 'spread spectrum power source' 107 generates the spread spectrum electrical, magnetic, and/or electromagnetic energy, which may be characterized with a power spectral density distributed over a frequency range. Wireless power spreading, "spread spectrum," over the RF power spectrum can be varied in at least two ways. A first technique includes frequency in a 'direct sequence' (i.e. 'k' a natural sequential number.) A step size (fₛₜₑₚ) may be proportional to a center frequency of an intended frequency band in which the resonant magnetic/RF signal power is delivered to the target device. Normally sufficiently rapid 'direct sequence' is difficult to follow by any intruders who intend to step into the power delivery channel. A second technique for frequency hopping spread spectrum power delivery includes frequency stepping in a pseudo random sequence ('k', a pseudo random variable) using the 'pseudo random code generator' 123 of the 'frequency multiplier generator' 119 of the spread spectrum power source 107. Other spread spectrum techniques may include phase shifting of a single frequency signal and/or phase shifting of a frequency hopping signal, e.g., +-90 degrees, +- 180 degrees, etc.

A 'spread spectrum power source' 107 includes a power source and a sending resonant coupling component, e.g., a 'resonant antenna array' 109 which has the functionality of radiating electrical/magnetic/RF power in a directional or omni-directional manner. The wireless energy propagated may be referred to herein generally as wireless energy, RF power, magnetic energy, electromagnetic energy, near field, and/or other similar terminology. In various embodiments, the resonant antenna array may be a single antenna, an array of antennas, or a one or more coils as is further illustrated in FIG. 1. Propagation of the wireless energy directionally may be achieved by a phase steering controller 111. Directionality of the wireless energy is achieved using an alternating current signal (a particular frequency (fₛ) or set of frequencies) with a sufficiently large antenna or coil(s). Directionality may be further increased by appropriate positioning of the antenna array/coil(s). The sending resonant coupling component may include one or more coils in other embodiments.

The 'phase steering controller' 111 derives one or more spread spectrum signals, e.g., spread spectrum alternating current from a synthesizer oscillator 117 and feeds the alternating current power to the sending resonant coupling component (Resonant antenna array) 109, feeds them into each of the isotropic radiators with correct phase difference to achieve the beam positioning in a required direction. Required optimum phase difference for a given antenna (isotropic radiator) spacing is to achieve a high directionality beam 135 is facilitated by 'phase steering controller' 111.

The 'communication circuit' 113 of the 'resonant antenna array' 109 supports the communication functionality of the 'spread spectrum power source' 107. In some embodiments, the 'spread spectrum power source' 107 services both communication and power delivery to the mobile (target) devices. Communications may be supported using separate portions of the RF spectrum and/or portions of the RF spectrum that support the powering signals.

A beacon generator 115 periodically radiates a beacon signal. The beacon generator 115 sends a signal offering RF power to the target devices in the vicinity of the spread spectrum power source 107. The radiation pattern for transmitting the beacon signal is an isotropic pattern 105 in one embodiment of the present invention. In another embodiment of the present invention the radiation pattern of the beacon signal transmission is a high directionality radiation beam which is swept 360 degrees in azimuth direction. During the beacon signaling a message is sent to all the target devices indicating the availability of the resonant wireless power.

A 'synthesizer oscillator' 117 is a stable reference RF signal whose frequency can be switched about a center frequency fₒ. The stable reference power signal fₒ is stepped up or down in accordance with the required direction. The resulting frequency fₛ = fₒ ± kfₛₜₑₚ, where 'k' is a 'pseudo random variable (number)' in the pseudo random sequence stepping of fₛ or a simple variable assuming sequential number in 'direct sequence stepping' of fₛ. fₛₜₑₚ is the size of the frequency step. The speed at which 'k' is varied decides the rate of frequency (fₛ) switching. The variable 'k' is varied at constant or a variable speed making the process tracking fₛ more complicated, particularly in random switching.

In the case of the 'pseudo random sequence stepping' a random synchronization is achieved between the 'spread spectrum power source' and the target devices by communicating a random seep value for pseudo random number generator. The 'random seed generator' 125 generates this random seed and communicates this to the corresponding 'target device'. This communication of sending the seed value is done on a separate communication channel in embodiment, and on the channel in which the RF power signal is delivered in another embodiment of the present invention.

The 'pseudo random code generator' 123 also enables multiple 'target device' power request to receive power from the same RF radiation beam. This is made possible by authenticating multiple 'target devices' simultaneously. This simultaneous authentication is done by delivering arbitrary random tokens to each of the 'target devices'. A token holding target device regularly exchange the token with the 'spread spectrum power source' 107 authenticating the 'target device' to continue power delivery till a cutoff request is sent by the target device. The 'pseudo random code generator' 123 generates the random token to each one the power requesting target devices. A direct sequence generator 121 may produce a direct sequence that is used for generating the spread spectrum power signal.

The principle of simultaneous power delivery to a plurality of 'target devices' 129, 133, 137, 141, etc., N 'target devices' is shown in FIG. 1 by receiving the resonant power signal from the same RF beam 135. Each of the devices communicates with the 'spread spectrum power source' 107 using their own communication channels represented in FIG. 1 as 127, 131, 139, 143, etc., N channels, with each of these channels being full duplex.

A sending resonant coupling component 103 may be a vertical structure such as an antenna array that is mounted on a housing, disposed in a ceiling, disposed in floor, formed in a kiosk, or built into a wall, for example. The component 103 illustrated in FIG. 1 is representative of a coil, antenna array, or another structure that is capable of creating a non-radiated magnetic field. In case of a dish antenna, the rotation of the antenna in azimuth direction accomplishes beam 135 steering. In case of phased array antenna, the 'phase steering controller' 111 accomplishes the steering of the RF beam 135.

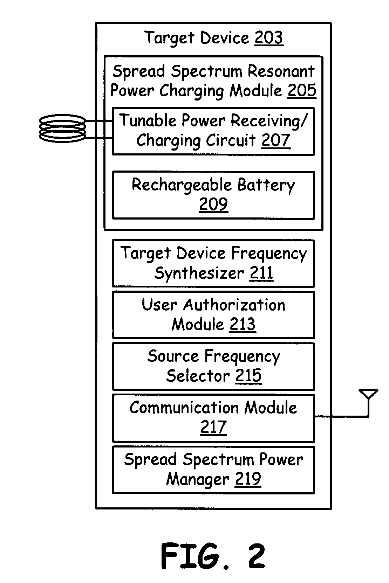

FIG. 2 is a block diagram illustrating a target device that wirelessly receives spread spectrum power in accordance with an embodiment of the present invention. The 'target device' 203 consists of a 'spread spectrum resonant power charging module' 205, 'target device frequency synthesizer' 211, 'user authorization module' 213, 'source frequency selector' 215, 'communication module' 217 and 'spread spectrum power manager' 219.

The 'spread spectrum resonant power charging module' 205 consists of a 'tunable power receiving/charging circuit' 207, and the 'rechargeable battery' 209. The 'tunable power receiving/ charging circuit' 207 consists of circuit that receives RF signal power and converts it into a DC voltage to charge the 'rechargeable battery' 209. The "tunable power receiving/ charging circuit' 207 is essentially a resonating circuit with rectifying diodes and storage capacitors acting as a voltage multiplier. The circuit 207 includes switchable lumped circuit elements, e.g., capacitors and inductors that are switchable to tune the circuit to receive the spread spectrum signal at particular frequencies. The circuit 207 is operated in synchronization with the spread spectrum frequency at any instant of time for the reasons of secured power delivery, whether it is 'direct sequence' or 'pseudo random sequence' principle, explained earlier. The 'rechargeable battery' 209 is a power storage device which energizes all the circuit modules of the 'target device'. The 'target device frequency synthesizer' 211 is a target device is an oscillator which generates the carrier signal required for communication.

The user authorization module 213 coordinates in authenticating the 'target device' during the resonant power delivery with that of the 'spread spectrum power source' 107 of FIG. 1. It sends the identity of the 'target device', subscription information, etc. in the coded form to the 'spread spectrum power source' 107. It receives the token and 'pseudo random sequence' from the 'spread spectrum power source' 107. It also interprets the beacon signal from the 'spread spectrum power source' 107 and decides whether to request for power or not. Apart from this functionality, it also periodically exchanges the token during the resonant power charging operation. This exchange of the token is for a continuous authentication. This exchange is very essential in the mobile environment of the 'target devices'.

The 'source frequency selector' 21 interacts with the power charging circuit 207 for tuning to the incoming spread spectrum signal. A switched mechanism may be used for tuning using the received (generated) "k" value for a 'direct sequence' or for a 'pseudo random number'. Essential in the 'direct sequence' or the 'pseudo random number' "k" is used to tune the 'power charging circuit' 207 to resonate with the spread spectrum signal form which it derives energy. The 'target device frequency synthesizer' 211 may also be employed for acquiring (or tuning to) a communication channel by the 'communication module' 217 during the communication operation. This channel frequency may be independent of the power signal frequency. The 'communication module' 217 includes all circuitry required to support communications including coding/decoding circuitry, modulation/demodulation circuitry, etc. In one embodiment, the 'communication module' 217 will use its own antenna for communications.

The 'spread spectrum power manager' 219 coordinates in all the operations such as power request, power cutoff, rechargeable battery discharge control, etc., operations. When the 'rechargeable battery' 209 voltage falls below a 'low voltage limit', the spread spectrum power manager makes a request for the RF power signal to the 'spread spectrum power source' 107 of FIG. 1. When the 'rechargeable battery' 209 voltage reaches the 'high voltage limit' it requests the 'spread spectrum power source' 107 of FIG. 1 to case delivery of wireless energy. Apart from these functionalities, the 'rechargeable battery' 209 discharges when powering the target device 203, which may include powering a voltage regulator to maintain a constant DC supply voltage.

Referring to both FIGs. 1 and 2, the spread spectrum power source 107 includes a power source operable to source spread spectrum alternating current power. The sending resonant coupling component 109 couples the spread spectrum alternating current power to a transmitting element (103 or the illustrated coil) for wireless power transmission by a non-radiated magnetic field (generally 135). The spread spectrum power source 107 is capable of dynamically tuning the wireless power transmission 135 according to a spread spectrum sequence. The spread spectrum power source includes a communication module 113 that is operable to communicate the spread spectrum sequence to the target device 129, 133, 137, 141, and/or 203.

In some embodiments, the sending resonant coupling component is a coil that is operable to source the non-radiated magnetic field. In one operation, the sending resonant coupling component forms the non-radiated magnetic field substantially omni-directionally. In another operation, the sending resonant coupling component forms the non-radiated magnetic field directionally.

The spread spectrum sequence is a frequency hopping sequence in some operations and/or a phase hopping sequence in other operations. The communication module may be an RF interface that is operable to receive from the target device one or more of a target device identity, target device billing information, target device power receipt level(s), and a target device battery charge state. The RF interface may also receive a request for power delivery from the target device and/or authentication information from the target device. The spread spectrum power source may further include a pseudo random sequence generator operable to generate a pseudo random sequence and a synthesizer oscillator operable to produce a frequency input to the power source used for generating the spread spectrum alternating current power.

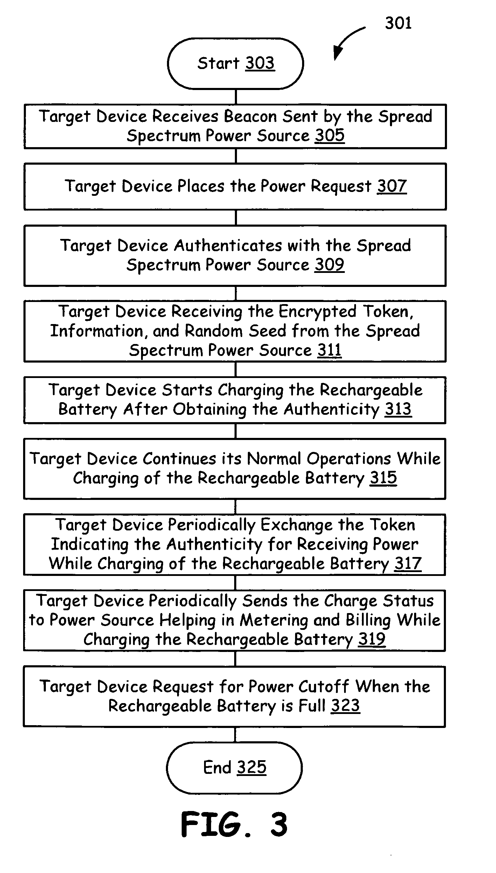

FIG. 3 is a flowchart illustrating operations 301 performed by the system of FIG. 1 during resonant power transfer from a spread spectrum power source to a target device in accordance with an embodiment of the present invention. Starting at the block 303 the 'target device' receives the beacon signal by the 'spread spectrum power source' 107 of FIG. 1 at the block 305. The 'target device' listens to the beacon signal. Subsequently it requests for the RF power delivery in the next block 307.

Before the power being delivered to the target device, the target device authenticates with spread spectrum power source 107 of FIG. 1 at the subsequent block 309. In response to the authentication information sent by the target device at the block 309, the spread spectrum power source 107 of FIG. 1 verifies its identity from its database and then decides to deliver the power, if it's found to be a genuine subscriber. When the authentication is met, the spread spectrum power source 107 of FIG. 1 sends the encrypted form of some initialization information, token, and random seed to the target device at the block 311. Subsequently the target device tunes itself to the incoming RF signal power and starts receiving the RF power at the block 313. During the battery recharge operation the normal functionalities of the target device are attended and performed in the block 315.

At the block 317 the target device periodically exchanges the token and other essential information that helps to synchronize the resonant frequencies of the target device 203 of FIG. 2 with the spread spectrum power source 107 of FIG. 1. In the meantime the 'target device' continues tracking the spectrum of the incoming RF signal power and derives the DC power for charging the 'rechargeable battery' 209 of FIG. 2. The target device periodically sends the charge status, metering information to the spread spectrum power source 107 of FIG. 1 at the block 321. When once the charging is complete it request spread spectrum power source of FIG. 1 to cutoff the RF signal power at the block 323 and ends the operation at the block 325.

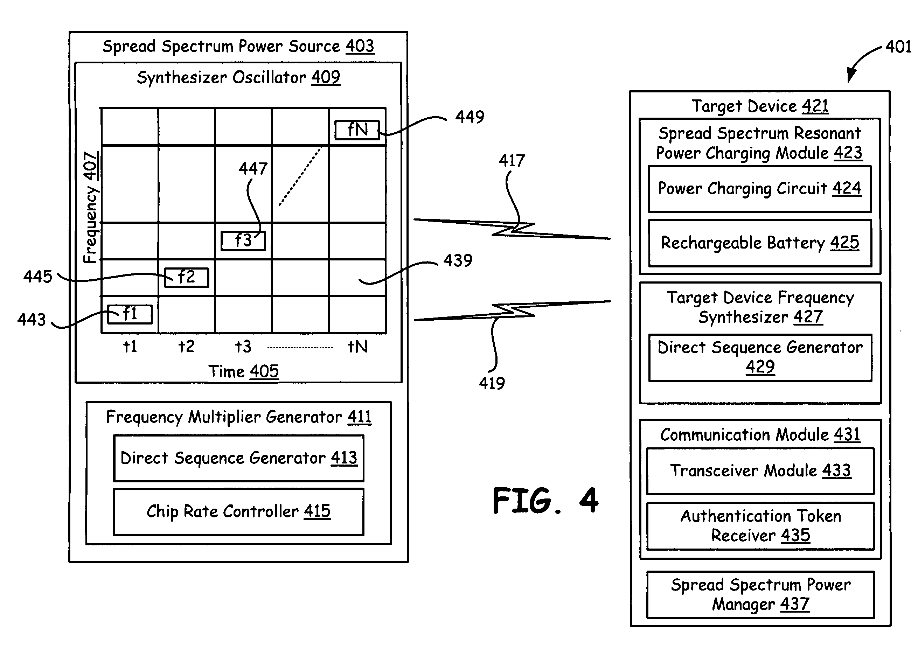

FIG. 4 is a block diagram illustrating a direct sequence spread spectrum power source that wirelessly transfers power to a target device in accordance with an embodiment 401 of the present invention. The 'spread spectrum power source' 403 (107 of FIG. 1 repeated) consists of synthesizer oscillator 409. The synthesizer oscillator 409 has a time 405 versus frequency 407 characteristics as shown in the FIG. 4. Each of the time/frequency slots such as 439 will have predetermined frequency at each time slot t₁, t₂ ... t_{N}. The time/frequency slot 443 at t₁, 445 at t₂, 447 at t₃, etc., and 449 at t_{N}. After time slot t_{N} the time/frequency slot repeats again from time slot t₁.

The 'frequency multiplier generator' 411 has 'direct sequence generator' 413 and the 'chip rate controller' 415. The 'direct sequence generator' 413 generates a direct sequence number ('k', explained earlier) and the direct sequence number goes into the synthesizer oscillator 409 for digital control of the oscillation frequency. The count rate (or speed) is determined by 'chip rate controller' 415. The chip rate maybe a constant or a variable speed communicated to 'target device' 421 on the 'wireless (full duplex) link' 419. The 'wireless link' 417 and 419 is the beam for delivering the RF signal power.

On the 'target device' 421 chip rate information is recovered to instantaneously tune the resonating circuit starting at time slots t₁, t₂, ... t_{N} with the respective frequencies f₁, f₂, ... f_{N} at the rate determined by the chip rate information received from the spread spectrum power source 403. This spread spectrum synchronized power reception is relatively more secured with very less chance of losing the power to the intruders.

The 'target device' 421 (203 of FIG. 2 repeated) is including of the 'spread spectrum resonant power charging module' 423, 'target device frequency synthesizer' 427, 'communication module' 431 and 'spread spectrum power manager' 437. The 'spread spectrum resonant power charging module' 423 further consisting of 'power charging circuit' 424 which converts the incoming direct sequence spread spectrum RF power signal to the DC charging voltage of the 'rechargeable battery' 425.

The 'target device frequency synthesizer' 427 generates the 'direct sequence' number at the rate determined by the chip rate communicated to the target device 421. The direct sequence number, ('k') resonates the 'power charging circuit' 424. In another embodiment of the present invention the 'direct sequence generator' 429 reproduces the 'direct sequence number ('k')' using the information communicated to target device 421.

The 'communication module' 431 has a transceiver module 433 for the transmit/receive operation which is the regular functionality of the 'target device' 421. The 'authentication token receiver' 435 performs the reception of the token sent by the 'spread spectrum power source' 403. The 'spread spectrum power manager' 437 coordinates the charging and the discharging operation of the 'rechargeable battery' 425.

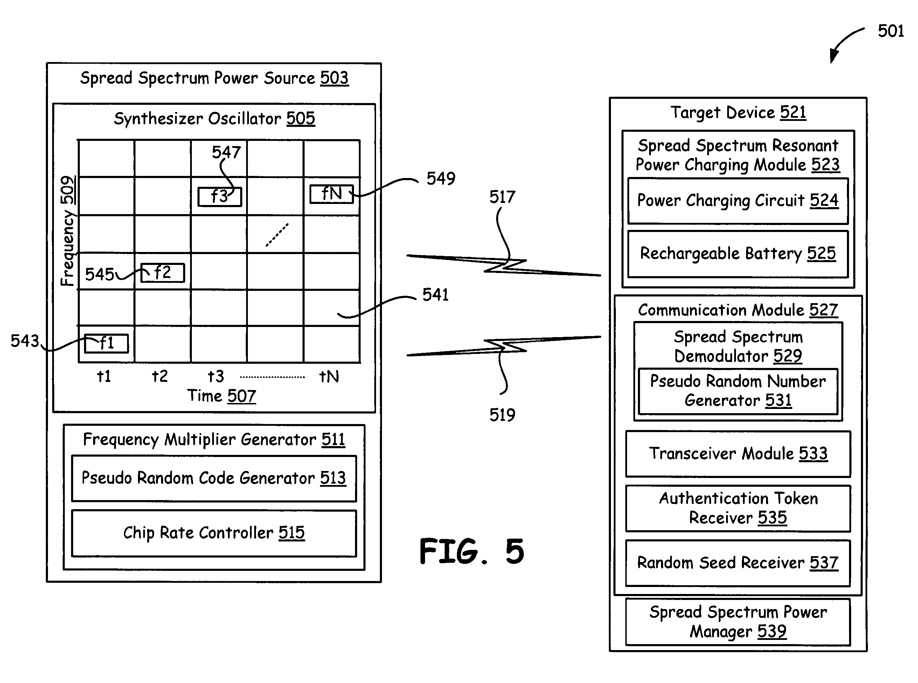

FIG. 5 is a block diagram illustrating a pseudo random sequence spread spectrum power source that wirelessly transfers power to a target device in accordance with an embodiment 501 of the present invention. The 'spread spectrum power source' 503 (107 of FIG. 1 repeated) consists of synthesizer oscillator 505 having a time 507 versus frequency 509 characteristics as shown in the FIG. 5. Each of the time/frequency slots such as 541 will have arbitrary random frequency determined by the random values of "k" at each time slot t₁, t₂ ... t_{N} indicated along the time 507 axis. The time/frequency slot 543 at t₁, 545 at t₂, 547 at t₃, etc., and 549 at t_{N}. After time t_{N} the time/frequency slot repeats again from t₁ with random frequencies.

The 'frequency multiplier generator' 511 has 'pseudo random code generator' 513 and the 'chip rate controller' 515. The 'pseudo random code generator' 513 generates the pseudo random count "k" whose value is used as digital input generate the corresponding RF signal frequency goes into the synthesizer oscillator 505. The count rate is determined by 'chip rate controller' 515. The chip rate maybe a constant or a variable speed communicated to 'target device' 521 on the 'wireless (full duplex) link' 519. The 'wireless link' 517 and/or 519 is a wireless beam for delivering wireless power to the target device 521.

In the 'target device' 521 instantaneous tuning is performed in synchronism with spread spectrum power source 107 frequency switching. This is done by receiving the chip rate information delivered to the target device. The 'k' value and its rate are the digital inputs to the spread spectrum resonant power charging module 523 for resonating circuit with the incoming spread spectrum RF signal power. This way of RF power delivery is relatively more secured compared to the direct sequence spread spectrum approach as explained earlier with reference to FIG. 4.

The 'target device' 521 is including 'spread spectrum resonant power charging module' 523, 'communication module' 527, and 'spread spectrum power manager' 539. The 'spread spectrum resonant power charging module' 523 further consisting of 'power charging circuit' 524 which converts the incoming pseudo random spread spectrum RF signal power to DC charging voltage for the 'rechargeable battery' 525.

The 'pseudo random number' 'k' used as digital input to the resonating 'power charging circuit' 524 are recovered using the 'random seed receiver' 537 and the 'pseudo random number generator' 531. The 'pseudo random number generator' 531 reproduces the pseudo random sequence/number which is either the value of 'k' or the authentication token. The 'communication module' 527 has the transceiver module 533 for the transmit/receive operation which is the normal functionality of the 'target device' 521. The 'authentication token receiver' 535 performs the function of receiving the token sent by the 'spread spectrum power source' 503. The 'spread spectrum power manager' 539 coordinates the charging and the discharging operation of the 'rechargeable battery' 525.

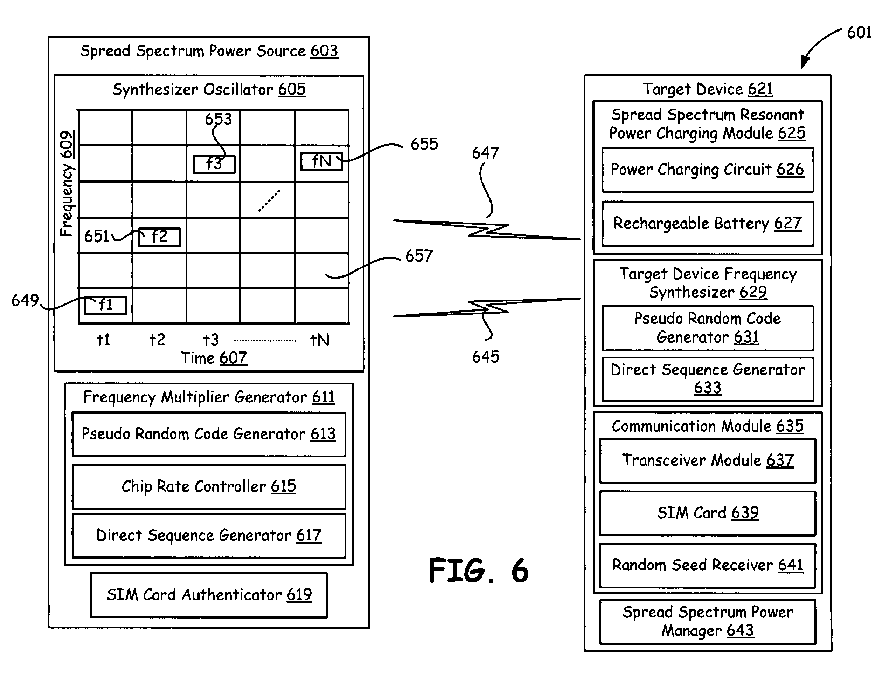

FIG. 6 is a block diagram illustrating a system 601 for wireless power delivery constructed according to embodiments of the present invention that uses SIM (Subscriber Identification Module) card based authentication of target devices. The 'spread spectrum power source' 603 (107 of FIG. 1 repeated) consists of synthesizer oscillator 605 having time 607 versus frequency 609 random characteristics as shown in the FIG. 6. Each of the time/frequency slots such as 657 will have random frequency at each time slot t₁, t₂ ... t_{N}. The time/frequency slot 649 at t₁, 651 at t₂, 653 at t₃, etc., and 655 at t_{N}. After time t_{N}, the time/frequency slot repeats again from t₁ with random frequencies in each slots.

The 'frequency multiplier generator' 611 has 'pseudo random code generator' 613, 'chip rate controller' 615, and 'direct sequence generator' 617. The 'pseudo random code generator' 613 generates the pseudo random sequence/number 'k' or the authentication token required to recover the pseudo random digital input 'k' to the spread spectrum resonant power charging module 625 of the target device 621 (203 of FIG. 2 repeated). The frequency switching speed is determined by the 'chip rate controller' 615. The 'direct sequence generator' 617 generate the direct sequence count 'k' which goes as digital input to the synthesizer oscillator 605. The chip rate maybe a constant or a variable speed communicated to 'target device' 621 on the 'wireless link' 645. The 'wireless link' 647 is a radio beam for delivering the RF signal power to 'target device' 621.

On the 'target device' 621 the chip rate information is recovered to instantaneous tuning of the 'spread spectrum resonant circuit 'power charging circuit' 625 in synchronism with the incoming spread spectrum with the frequencies f₁, f₂, ... f_{N} at the rate determined by the chip rate information.

The 'target device' 621 includes the 'spread spectrum resonant power charging module' 625, 'target device frequency synthesizer' 629, 'communication module' 635 and 'spread spectrum power manager' 643. The 'spread spectrum resonant power charging module' 625 further consisting of 'power charging circuit' 626 which converts the incoming 'direct sequence' or a 'pseudo random sequence' of spread spectrum RF signal power into the DC charging voltage of the 'rechargeable battery' 627.

The 'target device frequency synthesizer' 629 generates the 'pseudo random number', or the 'direct sequence number' 'k' at a rate determined by the chip rate communicated to the target device 621. The 'pseudo random number' or the 'direct sequence number' is used as a digital input for tuning the spread spectrum resonant power charging module 625 maximizes the power delivery. The 'direct sequence generator' 633 reproduces the 'direct sequence number' 'k' using the information communicated to it in another embodiment of the present invention. The pseudo random code generator 631 generates the pseudo random number for the variable 'k' and the authentication token required for secured power delivery.

The 'communication module' 635 has the 'transceiver module' 637 for the transmit/receive operation which is the normal functionality of the 'target device' 621. The SIM card 639 performs the function of authenticating the 'target device' 621 with the 'spread spectrum power source' 603. The SIM card 639 contains the personalized information of the user of the target device. Furnishing this information directly authenticates the target device. The SIM card info can be periodically communicated with the spread spectrum power source 603 for continuous authentication provision. The 'random seed receiver' 641 receives the random seed generated and communicated by the 'random seed generator' 125 of FIG. 1 required for 'pseudo random number generation for sequencing the frequency switching (hopping). The 'spread spectrum power manager' 643 coordinates the charging and the discharging operation of the 'rechargeable battery' 627.

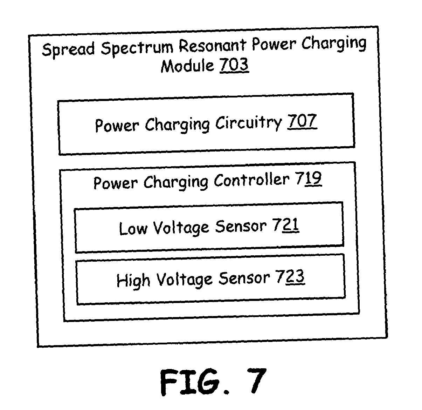

FIG. 7 is the block diagram illustrating a 'spread spectrum resonant power charging module' 703 constructed and operating in accordance with one or more embodiments of the present invention. The 'spread spectrum resonant power charging module' 703 consists of a 'power charging circuit' 707, and a 'power charging controller' 719. The 'power charging circuit' 707 consists of resonating antenna and tuning coil and capacitor. The tuning is achieved automatically by receiving the 'direct sequence' code as the digital input from the 'spread spectrum power source' 107 of FIG. 1 in one embodiment. In another embodiment of the present invention the tuning digital input (k) is generated in the target device 203 of FIG. 2. Voltage controlled capacitors are part of the tuning circuit. The tuned circuit output is fed into the diode/capacitor voltage multiplier. The output of the diode/capacitor voltage multiplier charges the 'rechargeable battery' 209 of FIG. 2.

The 'power charging circuit' 719 performs the sensing of the voltage at the output of the 'rechargeable battery' 209. A preset low voltage limit is sensed by a 'low voltage sensor' 721. Upon sensing the 'low voltage limit' the low voltage sensor 721 set a low voltage flag which is read by the 'spread spectrum power manager' 219 of FIG. 2. Upon reading the 'low voltage flag' the 'spread spectrum power manager' sends the RF power request to the 'spread spectrum power source' 107 of FIG. 1. In response to this the 'spread spectrum power source' 107 authenticates the 'target device' by receiving the subscription information sent by the 'user authorization module' 213 of FIG. 2 and subsequently deliver RF signal power.

During the charging operation the 'communication module' 217 of FIG. 2 exchanges token periodically, assuring that the power is delivered to an authentic 'target device' 203. The 'high voltage sensor' 723 senses the full charge preset high voltage limit of the 'rechargeable battery' 209 of FIG. 2. When the rechargeable battery voltage touches this limit the 'high voltage sensor' 723 sets a 'high voltage level' flag. The 'high voltage level' flag is read by the 'spread spectrum power manager' 219 of FIG. 2. The spread spectrum power manager 219 of FIG. 2 issues the power cutoff request to the 'spread spectrum power source' 107 of FIG.1. Upon this request the 'spread spectrum power source' 107 will cutoff the RF power delivery. Apart from this the 'power charging circuit' does the metering of power delivered for the billing purpose which is communicated to the 'spread spectrum power source' 107 of FIG. 1.

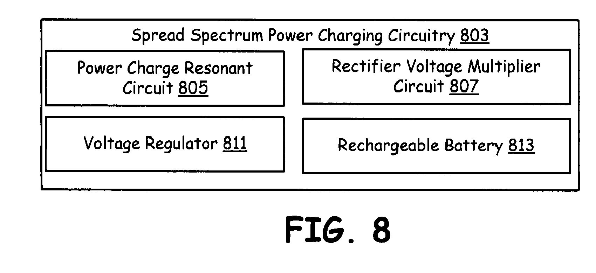

FIG. 8 is the block diagram illustrating 'spread spectrum power charging circuitry' 803 constructed and operating in accordance with one or more embodiments of the present invention. The spread spectrum power charging circuitry' 803 consists of 'power charge resonant circuit' 805, rectifier voltage multiplier circuit 807, voltage regulator 811 and the 'rechargeable battery' 813. The 'power charge resonant circuit' 805 includes the antenna coil and voltage controlled capacitor. The voltage controlled capacitor can be tuned using the 'direct sequence' number or the 'pseudo random sequence number' 'k' (after digital to analog conversation). The value of 'k' is generated in the target device 203 using the 'direct sequence generator' or a 'pseudo random sequence generator'. The tuning is done in step which helps in acquiring the discrete channels frequencies, changing in the 'direct sequence' or the 'pseudo random sequence'. The tuning rate is received or computed on the target device 203 of FIG. 2 based on a prior knowledge of the randomness and speed requirement for a required level of the secured power delivery.

The 'rectifier circuit voltage multiplier' 807 consists of diode/capacitor array. The diode/capacitor array is connected to multiply the incoming RF signal voltage. The multiplied voltage is fed to the 'rechargeable battery' 813 (209 of FIG. 2 repeated). The multiplied voltage start charging the 'rechargeable battery' 813 when a threshold charging voltage is built up in the diode/capacitor voltage multiplier of 807.

The voltage regulator is a DC-DC converter which can step up or step down the battery voltage output to the requirement of the 'target device' circuits. As the 'rechargeable battery' 813 discharges its terminal voltage stats falling. It's the functionality of the 'voltage regulator' 811 and the 'spread spectrum power manager' 219 of FIG. 2 to keep this voltage constant by adjusting the duty cycle of a switch inside the 'voltage regulator' 811.

The 'rechargeable battery' 813 is a power storage device that stores the resonant power from the incoming RF power signal. The 'rechargeable battery' 813 continues to power up or energize the circuit while charging.

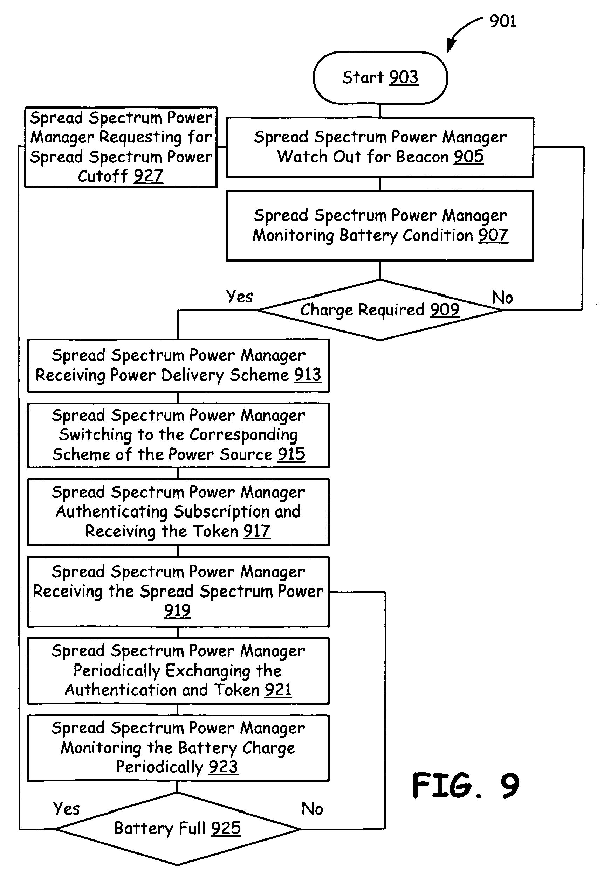

FIG. 9 is a flowchart illustrating operations 901 performed by the spread spectrum power manager of FIG. 4, FIG. 5, and FIG. 6 during resonant power charging operation in accordance with embodiments of the present invention. The 'spread spectrum power manager' starting at 903, listens to the beacon signal at the next block 905. The beacon signal is a signal offering the resonant power charging. This signal is issued by the 'spread spectrum power source' 107 of FIG. 1. The spread spectrum power manager 219 of FIG. 2 continues monitoring the rechargeable battery voltage level at the block 907. When once it senses the low voltage limit flag being set by the 'power charging controller' 719 it perform testing of the flag indicating whether the rechargeable battery 209 is fully discharged at the next decision block 909.

If the test returns false the 'spread spectrum power manager' 219 goes back to the block 905 and repeats its operation, else the 'spread spectrum power manager' 219 receives the information on the power delivery scheme from the 'spread spectrum power source' 107 of FIG. 1 at the block 913. The power delivery schemes are 'direct sequence spread spectrum', 'pseudo random spread spectrum' or the SIM card authentication based in accordance with the present invention.

After obtaining the power delivery scheme the 'spread spectrum power manager' 219 switches the target device 203 to the received mode by the 'spread spectrum power source' 107 of FIG. 1 at the next block 915.

In the subsequent block 917 the 'spread spectrum power manager' 219 receives the authentication and token information from the spread spectrum power source 107 of FIG. 1 for a secured power reception. Upon this the 'spread spectrum power manager' 219 starts receiving the spread spectrum power from the 'spread spectrum power source' 107 of FIG. 1. During the process of the power reception and the 'rechargeable battery' 209 of FIG. 2 charging the 'spread spectrum power manager' 219 involves target device 203 of FIG. 2 in periodic exchange of the authentication token information with the 'spread spectrum power source' 107 of FIG. 1.

During the process of charging the 'spread spectrum power manager' 219 continues monitoring the 'rechargeable battery' 209 charging status. At the next decision block 925 the 'spread spectrum power manager' 219 initiates the target device 203 of FIG. 2 to test whether 'rechargeable battery' is full or not. If the test returns false it transfers the control to previous back 919 and continues receiving the power, else it transfer the target device 203 control to the block 927. At the block 927 it sends the request for 'spread spectrum power source' 107 of FIG. 1 to cutoff power delivery. From there it takes the target device 203 control back to the initial block 905

As one of ordinary skill in the art will appreciate, the terms "operably coupled" and "communicatively coupled," as may be used herein, include direct coupling and indirect coupling via another component, element, circuit, or module where, for indirect coupling, the intervening component, element, circuit, or module does not modify the information of a signal but may adjust its current level, voltage level, and/or power level. As one of ordinary skill in the art will also appreciate, inferred coupling (i.e., where one element is coupled to another element by inference) includes direct and indirect coupling between two elements in the same manner as "operably coupled" and "communicatively coupled."

The present invention has also been described above with the aid of method steps illustrating the performance of specified functions and relationships thereof. The boundaries and sequence of these functional building blocks and method steps have been arbitrarily defined herein for convenience of description. Alternate boundaries and sequences can be defined so long as the specified functions and relationships are appropriately performed. Any such alternate boundaries or sequences are thus within the scope and spirit of the claimed invention.

The present invention has been described above with the aid of functional building blocks illustrating the performance of certain significant functions. The boundaries of these functional building blocks have been arbitrarily defined for convenience of description. Alternate boundaries could be defined as long as the certain significant functions are appropriately performed. Similarly, flow diagram blocks may also have been arbitrarily defined herein to illustrate certain significant functionality. To the extent used, the flow diagram block boundaries and sequence could have been defined otherwise and still perform the certain significant functionality. Such alternate definitions of both functional building blocks and flow diagram blocks and sequences are thus within the scope and spirit of the claimed invention.

One of average skill in the art will also recognize that the functional building blocks, and other illustrative blocks, modules and components herein, can be implemented as illustrated or by discrete components, application specific integrated circuits, processors executing appropriate software and the like or any combination thereof.

Moreover, although described in detail for purposes of clarity and understanding by way of the aforementioned embodiments, the present invention is not limited to such embodiments. It will be obvious to one of average skill in the art that various changes and modifications may be practiced within the spirit and scope of the invention, as limited only by the scope of the appended claims.

## Claims

1. A spread spectrum power delivery system for wirelessly delivering electric power to a target device, the spread spectrum power delivery system comprising:
a spread spectrum power source comprising:
a power source operable to source spread spectrum alternating current power;
a sending resonant coupling component operable to couple the spread spectrum alternating current power to a transmitting element for wireless power transmission by a non-radiated magnetic field;
the spread spectrum power source capable of dynamically tuning the wireless power transmission according to a spread spectrum sequence; and
a communication module coupled to the spread spectrum power source and operable to communicate the spread spectrum sequence to the target device.

2. The spread spectrum power delivery system of claim 1, wherein the sending resonant coupling component comprises a coil that is operable to source the non-radiated magnetic field.

3. The spread spectrum power delivery system of claim 1, wherein the sending resonant coupling component forms the non-radiated magnetic field substantially omni-directionally.

4. The spread spectrum power delivery system of claim 1, wherein the sending resonant coupling component forms the non-radiated magnetic field directionally.

5. The spread spectrum power delivery system of claim 1, wherein the spread spectrum sequence comprises a frequency hopping sequence.

6. The spread spectrum power delivery system of claim 1, wherein the spread spectrum sequence comprises a phase hopping sequence.

7. The spread spectrum power delivery system of claim 1, wherein the communication module comprises a Radio Frequency (RF) interface.

8. A method for wirelessly delivering electric power to a target device, the method comprising:
generating a spread spectrum sequence;
generating spread spectrum alternating current power based upon the spread spectrum sequence;
coupling the spread spectrum alternating current power to a transmitting element for wireless power transmission by a non-radiated magnetic field;
dynamically tuning the wireless power transmission according to the spread spectrum sequence; and
communicating the spread spectrum sequence to the target device.

9. The method of claim 8, further comprising forming the non-radiated magnetic field substantially omni-directionally.

10. The method of claim 8, further comprising forming the non-radiated magnetic field directionally.
